# EUROPÄISCHE PATENTANMELDUNG

(11) **EP 2 045 647 A1**
(43) Veröffentlichungstag der Anmeldung: **08.04.2009**
(21) Anmeldenummer: 08104260.8
(22) Anmeldetag: 04.06.2008
(51) Int. Cl.: G02B 27/01, G02B 5/26

(54) **Head-up Display**

(30) Priorität: 02.10.2007 DE 102007047232
(71) Anmelder: LINOS Photonics GmbH & Co. KG, 37081 Göttingen (DE)
(72) Erfinder: Porstendorfer, Jens, 80797 München (DE)
(74) Vertreter: Taresch, Gudrun

(57) **Zusammenfassung**

Die Erfindung betrifft ein Head-up Display mit einer Projektionseinheit (1) mit einem Bildgeber (8) zum Erzeugen eines virtuellen Bildes, wobei die Lichtquelle des Bildgeber (8) Licht in drei farbigen Banden emittiert. Das projizierte Bild wird auf einem Combiner (2) betrachtet. Erfindungsgemäß weist der Combiner (2) an seiner, dem Betrachter zugewandten, Konkavseite (22) einen Triple-Notch-Filter aufweist und an seiner, vom Betrachter abgewandten, Konvexseite (21) eine AntiReflex-Beschichtung.

## Beschreibung

Die Erfindung betrifft ein Head-up Display nach dem Oberbegriff von Anspruch 1.

Mittels Head-up Displays werden, für den Fahrer eines Fahrzeuges generierte Informationen, mit der Szene vor dem Fahrzeug kombiniert. Um die Sicht des Fahrers dabei möglichst wenig zu behindern, wird das eingeblendete Signal als virtuelles Bild vor der Windschutzscheibe dargestellt, so dass der Fahrer möglichst gleichzeitig die Umgebung und die eingeblendeten Daten beobachten kann, ohne das Auge unterschiedlich akkommodieren zu müssen.

Head-up Displays im Bereich der Luftfahrzeuge sind technisch bereits sehr ausgereift, allerdings auf einem technisch sehr aufwändigen Niveau, das mit hohen Kosten verbunden ist. Dies ist im Bereich der Luftfahrzeuge, bei denen es immer um recht geringe Stückzahlen mit exklusiver Ausstattung geht, kein großes Problem. Im Bereich der Land- und Wasserfahrzeuge steht die Entwicklung für Head-up Displays jedoch vor neuen Herausforderungen. So können müssen aus preislichen Gründen völlig neue Lösungen entwickelt werden, die bereits bekannten sind oftmals nicht gangbar. Oftmals ergeben sich auch ganz neue Aufgaben, die bei teueren Lösungen nicht auftraten, z.B. können aus preislichen Gründen keine großen Glaslinsen verwendet werden, stattdessen muss hier mit Kunststofflinsen gearbeitet werden.

Weiterhin machen sicherheitstechnische Aspekte bei Land- und Wasserfahrzeugen viele Lösungen aus dem Bereich der Luftfahrt nicht anwendbar. So ist z.B. aus sicherheitstechnischen und designbedingten Gründen eine große Distanz zwischen Fahrer und Combiner erforderlich. Bei gegebener Eyebox- und Bildfeldgröße ist damit automatisch eine bestimmte Combinergröße erforderlich. Ein denkbarer Combiner, welcher die gesamte sichtbare Szene vor dem Fahrzeug abdecken würde, wäre die Windschutzscheibe. Dient diese als Combiner, so ergeben sich aber Nachteile. So kann z.B. auf eine Windschutzscheibe, mit vertretbarem Aufwand, kein optischer Filter aufgebracht werden, zusätzlich führt die mangelnde Güte der Flächenform von Windschutzscheiben gerade bei großen Bildwinkeln zu Problemen.

Preisgünstige Head-up Displays für große Bildfelder sind deshalb ohne seperate Combiner kaum realisierbar. Der separate Combiner muss für die (typischerweise) drei Spektralbereiche des Bild-Signals möglichst gut reflektieren, gleichzeitig soll dabei die photopische Transmission jedoch nur gering eingeschränkt werden. Nur so kann der gewünschte Farbraum des Bild-Signales mit ausreichender Leuchtdichte dargestellt werden, ohne dabei die Durchsicht auf die Außenwelt maßgeblich zu behindern.

Der separate Combiner wird zwischen Windschutzscheibe und Fahrer angeordnet. Entsprechend der anzuzeigenden Bildwinkel soll der Combiner möglichst groß sein, kann jedoch, aus Sicherheits- und Kostengründen, nicht vor dem gesamten Sichtfeld des Fahrers angeordnet werden, wie dies bei den Piloten von Luftfahrzeugen der Fall ist. Er kann also nur den unteren Bereich des Sichtfeldes des Fahrers abdecken. Somit wird also bei Head-up Displays für Land- und Wasserfahrzeuge vom Fahrer der untere Teil der Umgebung durch den Combiner und der obere Teil ohne Combiner wahrgenommen. Dies erfordert, dass der obere und untere Teil, der vor dem Fahrzeug befindlichen Szene, für den Fahrer optisch möglichst nahtlos zusammengesetzt erscheinen muss. Dementsprechned darf der Combiner nur eine geringe Brechkraft und auch keine optische Keilwirkung besitzen. Bei Windschutzscheiben-HUD und bei HUD für Luftfahrzeuge werden üblicherweise Doppelbilder durch die extra eingebaute Keilwirkung des Combiners unterdrückt.

D.h. Combiner, welche für die Darstellung mehrfarbiger Bilder aus Luftfahrzeugen bekannt sind, können nicht einfach für Land- und Wasserfahrzeuge verwendet werden.

Ein derartiger Combiner ist bspw. aus der GB 2 265 726 A bekannt. Hier wird vorgeschlagen, einen extrem schmalbandigen sogenannten Triple-Notch-Filter auf den Combiner aufzubringen, um das Licht der auf dem Head-up Display darzustellenden Information gezielt zu reflektieren, alles andere sichtbare Licht aber ungehindert passieren zu lassen. Der Filter reflektiert jeweils drei Bänder von maximal 0,03 µm Breite vollständig. D.h. in drei extrem schmalen Bereichen wird die Transmission nahezu auf Null reduziert. Der hierfür notwenige Filter wird als Rugatefilter realisiert. D.h. in einem technisch extrem aufwändigen und kostenintensiven Verfahren, bei dem beim Aufbringen des Filters der Brechungsindex durch die aufgebrachte Schicht hindurch kontinuierlich variiert wird. Dieses Verfahren ist technisch schwer zu beherrschen und für Combiner für Land- und Wasserfahrzeuge viel zu aufwändig.

Der Erfindung liegt die Aufgabe zugrunde, ein voll farbtaugliches Head-up Display kostengünstig aber in guter optischer Qualität zu realisieren.

Gelöst wird die Aufgabe gemäß der Erfindung durch ein Head-up Display mit den Merkmalen von Anspruch 1.

Erfindungsgemäß wird der Triple-Notch-Filter an der, dem Betrachter zugewandten, vorzugsweise konkaven Seite des Combiners als konventioneller Mehrschicht-Filter aufgebaut. Dieser muss jedoch gut optimiert und mit einer speziellen Anti-Reflex-Beschichtung an der anderen, vom Betrachter abgewandten, vorzugsweise konvexen Combiner-Seite kombiniert werden. Aufgrund der Optimierung wird gewährleistet, dass möglichst viel Licht der Projektionseinheit des Head-up Displays am Combiner reflektiert wird, gleichzeitig aber möglichst viel Licht der Umgebung durch den Combiner hindurchtreten kann. Dadurch wird das darzustellende, mehrfarbige, am Combiner reflektierte Signal gut sichtbar, während gleichzeitig die Umgebung, auch durch den Combiner hindurch, hell genug wahrgenommen werden kann. Die herrschende Meinung, die in der GB 2 265 726 A zum Ausdruck gebracht wird, geht davon aus, dass die Mehrschicht-Filter Technologie für die Combiner mehrfarbiger Displays nicht anwendbar ist. Dennoch wurde dies versucht und es konnte gezeigt werden, dass sie sehr wohl verwendet werden kann, dass nur den entstehenden Problemen Rechnung getragen werden muss. So kann ein Mehrschicht-Filter nicht, wie der Rugate-Filter im Bereich der Kerben eine Reflektivität von nahezu 100% erreichen. Er bleibt also ein großer Anteil von Licht der Projektionseinheit, welches durch die, dem Betrachter zugewandte Seite des Combiner hindurchtritt und auf die Rückseite gelangen kann. Dort würde es zur Entstehung von Geisterbildern kommen. Um dies zu verhindern, wird an der, vom Betrachter abgewandten Seite eine Anti-Reflex-Beschichtung aufgebracht. Durch die Kombination dieser beiden Mehrschicht-Filter ist es möglich, diese kostengünstigere, einfacher beherrschbare Technologie auch für Mehrfarb-Head-up Displays zu nutzen, ohne wesentliche Qualitätseinbußen in Kauf nehmen zu müssen.

In einer vorteilhaften Ausführungsform der Erfindung beinhaltet der Triple-Notch-Filter einen Offset-Filter, der einen konstanten Anteil der, auf den Combiner auftreffenden Strahlung des Signals blockt bzw. reflektiert.
Eine auf Basis eines Mehrschicht-Filters aufgebaute Anti-reflex-Beschichtung, die für einen großen Signal-Spektralbereich und bei größeren Einfallswinkeln perfekt arbeiten soll, ist technisch sehr aufwendig. Deshalb wird der Tripple-Notch-Filter so aufgebaut, dass er einen Teil der Signal-Strahlung prinzipiell reflektieren und so gar nicht auf die Anti-reflex-Beschichtung auftreffen lässt.
Erst die Kombination von optimiertem Triple-Notch-Filter (mit Offset) und Anti-Reflex-Beschichtung ermöglicht die gewünschte Funktionalität des Combiners bezüglich Reflexion des Signals, Transmission der Szene vor dem Fahrzeug und Unterdrückung von Doppelbildern. Die geringen Einbußen in der Transparenz des Combiners sind akzeptabel, wenn ein Offset von 10-20% der Transmission realisiert wird. Dieser ermöglich es also, eine Anti-Reflex-Beschichtung in vertretbarem Aufwand herzustellen und dabei die Einbußen in der Transmission noch in einem vertretbaren Maß zu halten.

In einer weiteren bevorzugten Ausführungsform ist die Anti-Reflex-Beschichtung so aufgebaut, dass sie für sichtbares Licht eine Reflektivität von unter 1,5% hat, bevorzugt unter 0,6% hat. In den spektralen Bereichen mit störenden Anteilen der Leuchtdichte potentieller Doppelbilder im Vergleich zur Leuchtdichte des Signals soll die Reflektivität der Anti-Reflex-Beschichtung bevorzugt zwischen 0,4 und 0,6% liegen. Zusammen mit dem Offset des Triple-Notch-Filters kann damit eine effiziente Unterdrückung von Störbildern erfolgen, ohne die Anforderung an die Beschichtung zu hoch werden zu lassen.

In einer weiteren vorteilhaften Ausführungsform ist der Triple-Notch-Filter so aufgebaut, dass die Halbwertsbreite seiner Kerben im Bereich um 20% der Halbwertsbreite der Emissionspeaks der Lichtquelle der Projektionseinheit liegt. Vorzugsweise entsprechen sich die Halbwertsbreiten etwa. Dadurch, dass die Kerben etwas breiter gestaltet werden, kann die, für ein gutes Bild am Head-up Display, notwenige Reflektivität erreicht werden, obwohl, aufgrund des Mehrschicht-Verfahrens, nur eine begrenzte Tiefe der Kerben erreichbar ist. Dennoch sollte die Breite eine bestimmte Grenze nicht überschreiten, da sonst die Transmission des Combiners für die Umwelt zu gering wird.

Bevorzugt sind die Kerben unsymmetrisch geformt, d.h. sie unterscheiden sich in ihrer linken und rechten Halbwertbreite. Dies ist dann vorteilhaft, wenn die Lichtquelle aus Strahlern mit unsymmetrischem Emissionsspektrum besteht, wie es in der Regel bei LEDs der Fall ist. Die Ausrichtung der Form der Kerben nach der Form der Emissionsspektren ist eine Folge der Optimierung der Reflektivität des Combiners für das Signal.
Über die Lage, Form und Tiefe der Kerben ist es zusätzlich möglich, den Farbton des Combiners im Durchlicht einzustellen. So kann man den Combiner für die Durchleuchtung mit Normlicht D65 exakt farbneutral erscheinen lassen. Mit dieser Methode sind natürlich eine Vielzahl anderer, wenn auch dezenter Färbungen des Combiners einstellbar.
Bezüglich der Beeinflussung der vom Combiner beeinflussten Photometrie des HUD können alternativ auch zwei andere Zielstellungen über die Parameter (Tiefen, Halbwertsbreiten, Lagen) der Kerben des Notchfilters angestrebt werden. Zum einen lässt sich über diese Parameter der Farbort des Weisspunktes des Signals grundlegend einstellen. Desweiteren kann über die Form der Kerben die Größe des Signalfarbraumes (gamut) beeinflusst werden.

In einer weiteren vorteilhaften Ausführungsform ist der Triple-Notch-Filter und bevorzugt auch die Anti-Reflex-Beschichtung so ausgebildet, dass Transmission bzw. Reflektivität für die beiden Polarisationsrichtungen des auf den Combiner projizierten Lichts annähernd gleich ist. Vorteilhafterweise weichen diese um nicht mehr als 20%, bevorzugt 10% voneinander ab. Bei Head-up Displays, mit der Windschutzscheibe als Combiner, wird entsprechend der Fresnelschen Formeln das parallel polarisierte Licht stark unterdrückt. Nur dieses Licht wird jedoch von Sonnenbrillen mit polarisierenden Gläsern durchgelassen. Um also auch beim Tragen einer solchen Sonnenbrille ein Signal erkennen zu können, ist es notwenig, parallel polarisiertes Licht an dem Triple-Notch-Filter gut reflektieren zu lassen. Erfindungsgemäß wird aber nicht nur auf dieses Licht abgestellt sondern es wird versucht, senkrecht und parallel polarisiertes Licht möglichst gleich zu behandeln. Dadurch ist es möglich, für das Head-up Display günstige Kunststofflinsen in der Projektionseinheit zu verwenden. Bei günstigen Kunststofflinsen kann es zu Spannungen kommen, welche Doppelbrechungen des Lichts verursachen. Dies kann zu Störungen im Bild führen, wenn senkrecht und parallel polarisiertes Licht sehr unterschiedlich am Combiner reflektiert werden. Dieser Filteraufbau macht also die Verwendung von günstigen Kunststofflinsen v.a. in der Projektionseinheit des Head-up Displays möglich und bewirkt damit eine erhebliche Kostenreduktion.

Die spektralen Eigenschaften von Mehrschicht-Filtern sind im Allgemeinen winkelabhängig. Deshalb werden die Eigenschaften der Filter bevorzugt für den Nominal-Einfallswinkel optimiert. Dennoch soll die Abweichung der Transmissions- bzw. Reflexionseigenschaften für die beiden Polarisationsrichtungen im Bereich von 15° um den Nominal-Einfallswinkel nicht mehr als 20% betragen.

In einer weiteren bevorzugten Ausführungsform ist der Filter so aufgebaut, dass er im Bereich der Infrarotstrahlung nahezu kein Licht durchlässt. Dadurch wird verhindert, dass die Wärme des Sonnenlichts auf die Projektionseinheit fallen und dabei zu Problemen führen kann.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

Es zeigen:
- Fig. 1: Schematisch ein erfindungsgemäßes Head-up Display in einer ersten Ausführungsform,
- Fig. 2: das Spektrum von als Lichtquelle geeigneten LEDs,
- Fig. 3: die Transmission eines erfindungsgemäßen Triple-Notch-Filters,
- Fig. 4: schematisch ein Notch eines erfindungsgemäßen Filters und
- Fig. 5: die Reflektivität eines erfindungsgemäßen Antireflex-Filters.

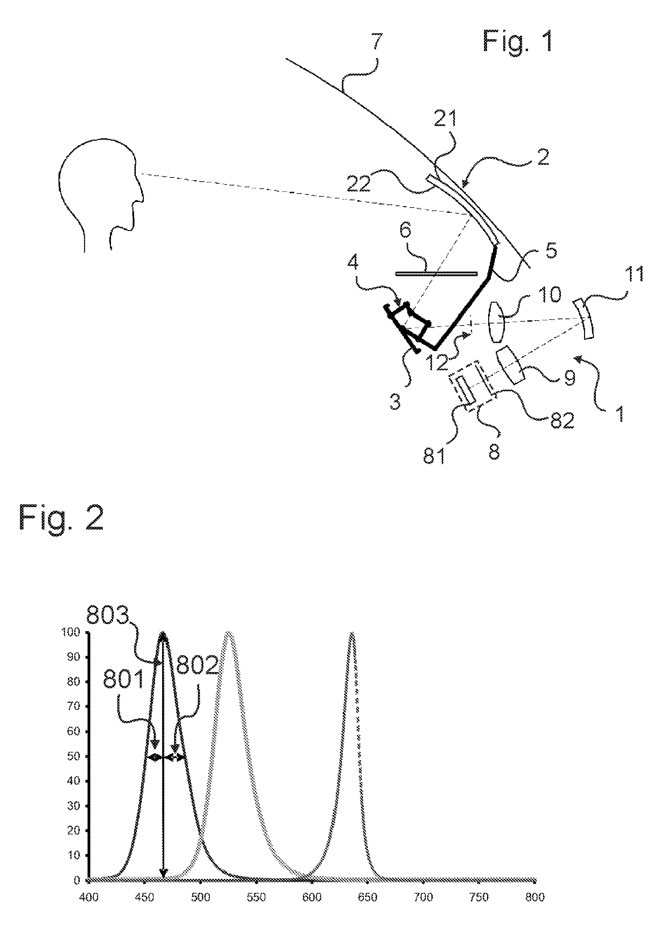

Die Figur 1 zeigt in einer schematischen Darstellung den Aufbau eines erfindungsgemäßen Head-up Displays, welches in ein Kraftfahrzeug eingebaut ist. Das Head-up Display weist eine Projektionseinheit 1 und eine Combinereinheit 2 auf. Die Combinereinheit 2 ist als vorzugsweise Freiform-Kunststoffteil ausgebildet und weist eine, vom Betrachter abgewandte Seite 21 und eine, dem Betrachter zugewandte Seite 22 auf. Im Strahlengang zwischen Combinereinheit 2 und Projektionseinheit 1 befindet sich ein Planspiegel 3, welcher über ein Koppelgetriebe 4 und eine Verlängerung 5 mit dem Combiner 2 in Verbindung steht und eine Abdeckung 6, die die optische Einheit des Head-up Displays im Cockpit des Kraftfahrzeuges einschließt. Projektionseinheit 1, Planspiegel 3 und Koppelgetriebe 4 befinden sich unterhalb der Abdeckung 6, die Combinereinheit 2 befindet sich oberhalb der Abdeckung vor der Windschutzscheibe 7.

Die Projektionseinheit 1 des erfindungsgemäßen Head-up Displays weist eine Bilderzeugungseinrichtung 8 auf, welche als mittels Leuchtdioden 81 oder anderen Lichtquellen beleuchteter Lichtmodulator 82 wie bspw. LCD oder DMD oder auch als selbst leuchtendes Display ausgebildet ist. Ferner weist die Projektionseinheit 1 eine Kombination aus einer ersten Linse 9, einer zweiten Linse 10 und einem zwischen diesen beiden Linsen 9, 10 angeordneten Manginspiegel 11 auf.

Das vom Head-up Display anzuzeigende Bild wird erzeugt, indem ein Lichtmodulator 82 das von dreifarbigen LED 81 in Rot, Grün und Blau, emittierte Licht entsprechend der darzustellenden Daten moduliert. Die LED 81 sind möglichst Lichtstark, so dass das, dem Betrachter angezeigte Bild ausreichend intensiv ist. Typische LED-Spektren, welche für ein Head-up Display geeignet sind, wurden in der Fig. 2 dargestellt, in der die relative Intensität in Prozent gegen die Wellenlänge in nm aufgetragen ist.

Das am Lichtmodulator 82 erzeugte Bild wird über die optischen Elemente 9, 10 und 11 der Projektionseinheit 1 in ein Zwischenbild 12 abgebildet.

Beim Durchlaufen der Kunststofflinsen 9 und 10 wird das Bild stark vergrößert, so dass ein großer Einblickbereich und ein großes Gesichtsfeld realisiert werden kann, gleichzeitig wird über diese Linsen 9 und 10 eine Abbildung in ein Zwischenbild 12 vorgenommen. Die bei der Abbildung in ein Zwischenbild 12 hervorgerufene Bildfeldwölbung kann dabei direkt durch die Linsen 9 und 10 wieder kompensiert werden, da diese als Positivlinsen ausgebildet sind. Bei dieser Abbildung kommt es jedoch insbesondere bei der Verwendung von Kunststofflinsen und der Abbildung mit großem Gesichtsfeld zu starken Farbfehlern. Deshalb wird erfindungsgemäß zwischen den Positivlinsen 9 und 10 ein Manginspiegel 11 angeordnet, über den sowohl eine Faltung des Strahlenganges als auch eine Korrektur der durch die Linsen 9 und 10 hervorgerufenen Farbfehler vorgenommen wird. Um eine optimale Farbfehlerkorrektur gewährleisten zu können sind die Linsen 9 und 10 und die als Bestandteil des Manginspiegels 11 vorgesehene Negativlinse aus sehr ähnlichem, vorzugsweise demselben Material gefertigt. Um die Korrektur der Farblängs- und Farbquerfehler zu gewährleisten, wurde der Manginspiegel 11 so positioniert, dass er in der Aperturblende liegt. Hierdurch können weitere Elemente, z. B. mit anderen Dispersionen oder diffraktive optische Elemente zur Farbkorrektur vermieden werden. Die Farbkorrektur wird durch die Kombination von Positivlinse 9 für die telezentrische Abbildung des auf dem Display 8 erzeugten Bildes, dem Manginspiegel 11 mit seiner Negativlinse und einer weiteren im Strahlengang nach dem Manginspiegel angeordneten Positivlinse 10 allein gewährleistet. Dies geschieht im Wesentlichen durch die Auswahl ähnlicher bzw. identischer Materialien für die Linsen und die gewählte Position des Manginspiegels 11. Erst hierdurch wird es möglich, ein mehrfarbiges System mit einem großen Gesichtsfeld und einer so großen Eye-Box zu erzeugen.

Das Zwischenbild 12 wird über einen Planspiegel 3 und einem Combiner 2 in ein virtuelles Bild projiziert, an dem es vom Fahrer des Kraftfahrzeuges betrachtet werden kann. Der Combiner 2 ist relativ stark gekrümmt, hat also bezüglich seiner Eigenschaften als Spiegel eine relativ kurze Brennweite. Hierdurch ist es möglich auch die vom Rand der Eye-Box zum Rand des virtuellen Bildes verlaufenden Strahlen zu erfassen ohne dafür extrem große Optikelemente in der Projektionseinheit 1 verwenden zu müssen. Der Combiner 2 ist als Freiformfläche ausgebildet und mittels Mehrschicht-Filtern beschichtet.

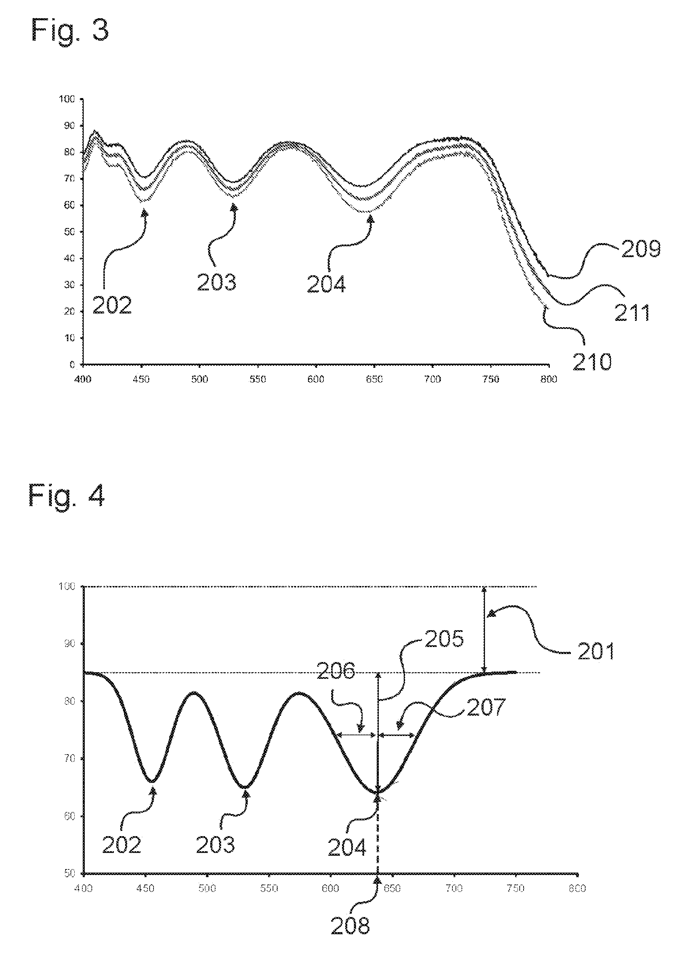

Doppelbild-Unterdrückung, Reflektivität und Transmission werden durch diese Beschichtungen gewährleistet. Hierzu ist auf der reflektiven Seite 22 des Combiners 2 ein sogenannter Triple-Notch-Filter (Drei-Kerb-Filter) angebracht. Die Transmission eines hierfür geeigneten Mehrschichtfilters ist in der Fig. 3 dargestellt, bei der diese in Prozent gegen die Wellenlänge in nm aufgetragen ist. Auf die speziellen Eigenschaften der Filter wird im Text weiter unten näher eingegangen.

Sowohl Planspiegel 3 als auch Combiner 2 sind beweglich gelagert und über ein Koppelgetriebe 4 und eine Verlängerung 5 dessen miteinander verbunden. Über eine Bewegung des Koppelgetriebes 4 mittels einer nicht dargestellten Antriebseinheit wird das Bild bzw. die Eye-Box des Betrachters höhenverstellt und kann somit auf die Sitzeinstellung oder die Größe des Betrachters angepasst werden. Damit der Combiner 2 bei der Bewegung um den kleinen Winkelbereich nicht aus dem Strahlengang herausschwenkt, muss der Planspiegel 3 mit halber Winkelgeschwindigkeit nachgedreht werden. Dabei sollen sich der Combiner 2 und der Planspiegel 3 um die selbe Achse drehen, die vorzugsweise auf der Oberfläche des Planspiegels 3 liegen soll. Die Glasabdeckung 6 wird bei der Höhenverstellung nicht mitbewegt. Sie kann an ihrer Position bleiben.

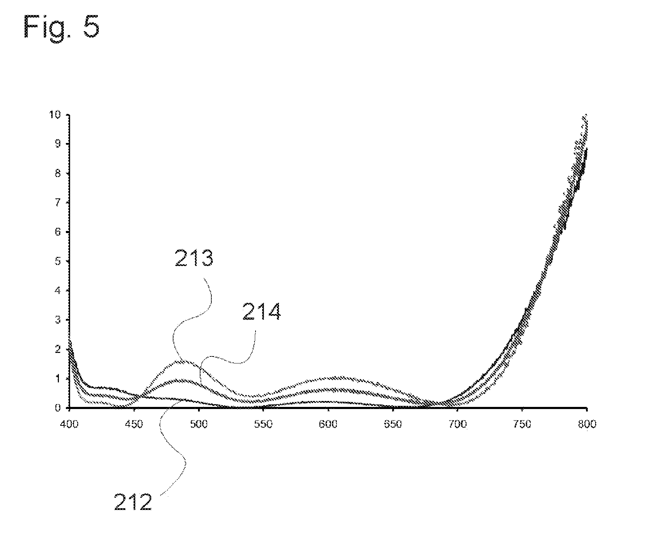

Eine große Hürde für die Realisierung eines kostengünstigen mehrfarbigen Head-up Displays stellt, wie bereits erwähnt, die Beschichtung des Combiners 2 dar. Diese wurde hier durch eine Kombination eines, im Mehrschichtverfahren erzeugten Triple-Notch-Filters auf der Seite 22 und einer Anti-Reflex-Beschichtung auf der Seite 21 realisiert. Die Transmission eines, für eine LED-Lichtquelle 81, wie sie in der Fig. 2 gezeigt ist, geeigneten erfindungsgemäßen Triple-Notch-Filters ist in der Fig. 3 dargestellt, die Reflektivität einer entsprechenden Anti-Reflex-Beschichtung in Fig. 5. Fig. 4 zeigt schematisch die Transmission eines Triple-Notch-Filters, anhand dessen die verwendeten Größen erläutert werden können.

Wie aus den Fig. 3 und 4 hervorgeht, ist Bestandteil des Triple-Notch-Filters ein Offset-Filter, welcher zu dem dargestellten Offset 201 von etwas mehr als 10-15% in der Transmission führt. Dieser Offset 201 gewährleistet, dass in keinem Spektralbereich die volle Intensität der Strahlung der LED 81 auf die Konvexseite 21 tritt. Dadurch wird gewährleistet, dass eine gute, im Mehrschichtverfahren erzeugte Anti-Reflex-Beschichtung ausreicht, um die Entstehung von Doppelbildern zu verhindern. Zusätzlich zu diesem Offset-Filter ist ein Bestandteil des Filters auf der Seite 22 der eigentliche Triple-Notch-Filter, der, wie in der Fig. 3 zu sehen ist zu drei Kerben 202, 203, 204 in der Transmission führt. Im Bereich der Kerben 202, 203, 204 wird die Transmission wiederum um eine Tiefe 205 von etwa 20% gesenkt. Diese Tiefe 202 der Kerben 202, 203, 204 ist, im Vergleich zu Rugate-Filtern gering. Um dennoch eine ausreichende Reflektivität des Triple-Notch-Filters zu erzielen, sind die Kerben 202, 203, 204 relativ breit. So entsprechen ihre linken und rechten Halbwertsbreiten 206 und 207 etwa den Halbwertsbreiten 801 und 802 der Emissionskurven der LED 81. Dabei sind die Halbwertsbreiten 206 und 207 der blauen und grünen Kerbe 202 und 203 etwas geringer als die Halbwertsbreiten 206 und 207 der roten Kerbe 204. Die Parameter der Kerben wurden so eingestellt, dass der Combiner in Durchsicht bei Normlicht D65 dezent grau erscheint. Die Positionen der Kerben 202 und 203 sind leicht gegenüber der Position der maximalen Intensität 803 der LED-Spektren verschoben. So ist die Position der minimalen Transmission 208 der blauen Kerbe 202 gegenüber der Position der maximalen Intensität 803 der blauen LED-Strahlung verschoben, d.h. um mehr als 10nm ins Blaue versetzt.

In den Fig. 3 und 5 sind die tatsächliche Transmission und Reflektivität von verwendetem Triple-Notch-Filter und Anti-Reflex-Beschichtung zu sehen. Fig. 3 zeigt die Transmission von p-polarisiertem und s-polarisiertem Licht 209 und 210, sowie den Durchschnitt 211. Wie aus dieser Darstellung ersichtlich wird, weichen die Wirkungen des Triple-Notch-Filters auf p- und s-polarisiertes Licht nur wenig voneinander ab. Aus dieser Figur geht auch deutlich hervor, dass beim Übergang zum infraroten Anteil des Spektrums die Transmission des Filters stark absinkt und dann gegen Null geht. Entsprechend geht die Reflektivität der Anti-Reflex-Beschichtung, welche in Fig. 5 dargestellt ist, hier steil hoch. Auch die Anti-Reflex-Beschichtung ist so optimiert, dass sie sich auf die Reflektivität für p-polarisiertes und s-polarisiertes Licht 212 und 213 ähnlich auswirkt. Dabei wird darauf geachtet, dass die Reflektivität im Durchschnitt 214 vor allem in den Spektral-Bereichen minimal wird, in denen die Leuchtdichte eines potentiellen Doppelbildes störend wahrgenommen werden könnte.

### Bezugszeichenliste:

- 1: Projektionseinheit
- 2: Combinereinheit

- 21: vom Betrachter abgewandet Seite
- 22: dem Betrachter zugewandet Seite

- 3: Planspiegel
- 4: Koppelgetriebe
- 5: Verlängerung
- 6: Abdeckung
- 7: Windschutzscheibe
- 8: Bilderzeugungseinrichtung

- 81: Leuchtdioden
- 82: Lichtmodulator

- 9: erste Linse
- 10: zweite Linse
- 11: Manginspiegel
- 12: Zwischenbild

- 201: Offset
- 202: Kerbe für Blau
- 203: Kerbe für Grün
- 204: Kerbe für Rot
- 205: Tiefe
- 206: Linke Halbwertsbreite
- 207: Rechte Halbwertsbreite
- 208: Position der minimalen Transmission
- 209: Transmission p-polarisiertes Licht
- 210: Transmission s-polarisiertes Licht
- 211: Transmission Durchschnitt
- 212: Reflektivität p-polarisiertes Licht
- 213: Reflektivität s-polarisiertes Licht
- 214: Reflektivität Durchschnitt

- 801: Linke Halbwertsbreite
- 802: Rechte Halbwertsbreite
- 803: Maximale Intensität

## Patentansprüche

1. Head-up Display mit einer Projektionseinheit (1) mit einem Bildgeber (8) zum Erzeugen eines virtuellen Bildes, wobei die Lichtquelle des Bildgeber (8) Licht in drei farbigen Banden emittiert, und einem Combiner (2) zum Betrachten des virtuellen Bildes, **dadurch gekennzeichnet, dass** der Combiner (2) an seiner, dem Betrachter zugewandten, Seite (22) einen Triple-Notch-Filter aufweist und an seiner, vom Betrachter abgewandten, Seite (21) eine Anti-Reflex-Beschichtung.

2. Head-up Display nach Anspruch 1, **dadurch gekennzeichnet, dass** der Triple-Notch-Filter einen Offsetfilter aufweist, mit dem die Transmission des Combiners im Wellenlängenbereich des vom Bildgeber (8) emittierten Lichts um einen konstanten Faktor reduziert wird.

3. Head-up Display nach Anspruch 2, **dadurch gekennzeichnet, dass** der Offsetfilter die Transmission des Combiners zwischen 10 und 20% reduziert.

4. Head-up Display nach Anspruch 1, 2 oder 3, **dadurch gekennzeichnet**, die Anti-Reflex-Beschichtung im Wellenlängenbereich des vom Bildgeber (8) emittierten Lichts eine Reflektivität von unter 1,5% hat.

5. Head-up Display nach Anspruch 4, **dadurch gekennzeichnet, dass** die Anti-Reflex-Beschichtung auf der vom Betrachter abgewandten, Seite (21) des Combiners in den Spektralbereichen potentiell störender Doppelbilder, eine Reflektivität von 0,4-0,6% hat.

6. Head-up Display nach Anspruch 1, **dadurch gekennzeichnet, dass** die Halbwertsbreite der Kerben des Triple-Notch-Filters in Bereich der Halbwertsbreite ±20% des entsprechenden Emissionspeaks der Lichtquelle liegt.

7. Head-up Display nach Anspruch 6, **dadurch gekennzeichnet, dass** die Halbwertsbreite der Kerben des Triple-Notch-Filters etwa der Halbwertsbreite des entsprechenden Emissionspeaks der Lichtquelle entspricht.

8. Head-up Display nach Anspruch 6 oder 7, **dadurch gekennzeichnet, dass** die Kerben unsymmetrisch geformt sind.

9. Head-up Display nach Anspruch 1, **dadurch gekennzeichnet, dass** der Triple-Notch-Filter so aufgebaut ist, dass seine Transmission bzw. Reflektivität für senkrecht- und parallel- polarisiertes Licht sich für den bevorzugten Einfallswinkel um maximal 20% unterscheidet.

10. Head-up Display nach Anspruch 9, **dadurch gekennzeichnet, dass** der Triple-Notch-Filter so aufgebaut ist, dass seine Transmission bzw. Reflektivität für senkrecht- und parallel- polarisiertes Licht sich für den bevorzugten Einfallswinkel um maximal 10% unterscheidet.

11. Head-up Display nach Anspruch 9, **dadurch gekennzeichnet, dass** der Triple-Notch-Filter so aufgebaut ist, dass seine Transmission bzw. Reflektivität für senkrecht- und parallel- polarisiertes Licht sich im Bereich von ±15° um den bevorzugten Einfallswinkel um maximal 20% unterscheidet.

12. Head-up Display nach Anspruch 1, **dadurch gekennzeichnet, dass** der Triple-Notch-Filter so aufgebaut ist, dass seine Transmission im Bereich der Infrarotstrahlung gegen Null geht.

13. Head-up Display nach Anspruch 1, **dadurch gekennzeichnet, dass** die Halbwertsbreite, Tiefe und Position der Kerben des Triple-Notch-Filters so eingestellt sind, dass der Combiner für eine definierte Lichtart in der Durchsicht einen definierten Farbton zeigt.

14. Head-up Display nach Anspruch 1, **dadurch gekennzeichnet, dass** die Halbwertsbreite, Tiefe und Position der Kerben des Triple-Notch-Filters so eingestellt sind, dass der von der Lichtquelle darstellbare Signal-Farbraum vergrößert wird.

15. Head-up Display nach Anspruch 1, **dadurch gekennzeichnet, dass** die Halbwertsbreite, Tiefe und Position der Kerben des Triple-Notch-Filters so eingestellt sind, dass der von der Lichtqelle erzeugte Signal-Weisspunkt eine definierte Farbbalance erhält.
